## Europäisches Patentamt

## European Patent Office

## Office européen des brevets

(19)

(11) Veröffentlichungsnummer: **0 218 020**
**B1**

(12) **EUROPÄISCHE PATENTSCHRIFT**

(45) Veröffentlichungstag der Patentschrift: **12.09.90**

(51) Int. Cl.⁵: **B 60 J 7/14, B 60 J 7/047**

(21) Anmeldenummer: **86109752.5**

(22) Anmeldetag: **16.07.86**

(54) **Ausstell-Schiebedach für Kraftfahrzeuge.**

(30) Priorität: **10.09.85 DE 3532150**

(43) Veröffentlichungstag der Anmeldung:
**15.04.87 Patentblatt 87/16**

(45) Bekanntmachung des Hinweises auf die
Patenterteilung:
**12.09.90 Patentblatt 90/37**

(84) Benannte Vertragsstaaten:
**DE FR GB IT SE**

(56) Entgegenhaltungen:
**DE-C- 807 474**
**GB-A- 463 048**
**US-A-2 861 836**

(73) Patentinhaber: **FORD-WERKE
AKTIENGESELLSCHAFT
Ottoplatz 2 Postfach 21 03 69
D-5000 Köln 21 (DE)**
(84) **DE IT SE**

(73) Patentinhaber: **FORD MOTOR COMPANY
LIMITED
Eagle Way
Brentwood Essex CM13 3BW (GB)**
(84) **GB**

(73) Patentinhaber: **FORD FRANCE SOCIETE
ANONYME
344 Avenue Napoléon Bonaparte B.P. 307
F-92506 Rueil Malmaison Cedex (FR)**
(84) **FR**

(72) Erfinder: **Kloppe, Herbert
Kornblumenweg 3
D-5024 Pulheim (DE)**
Erfinder: **Vogt, Hans
Kielsberg 36
D-5063 Overath (DE)**

(74) Vertreter: **Ritzkowsky, Harald, Dipl.-Ing.
Ford-Werke Aktiengesellschaft Patentabteilung
Z/DRP Ottoplatz 2
D-5000 Köln 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Ausstell-Schiebedach für Kraftfahrzeuge der im Oberbegriff des Patentanspruches 1 aufgezeigten Art.

Aus der DE-A-32 02 646 ist ein Ausstellschiebedach für Kraftfahrzeuge mit einem ersten vorderen Deckelteil und weiteren seitlich geführten und entgegen der Fahrtrichtung verschiebbaren Deckelteilen bekannt, mit Führungsteilen, die entlang einer Gleitschiene bewegbar sind und einerseits mit Gleitelementen und andererseits mit Führungselementen versehen sind und wobei die Deckelteile über an einer Kulisse bzw. den Führungsteilen der Deckelteile angreifende Gleitteile mit ihren hinteren Kanten jalousieartig nach oben ausstellbar sind und die weiteren Deckelteile hierauf über die Gleitteile zum Freigeben der Dachöffnung in Fahrzeuglängsrichtung nach hinten einen Stapel bildend zusammenschiebbar sind, wobei die Betätigungseinrichtung in Form einer an allen Gleitteilen angreifenden Gewindespindel ausgebildet ist und ein Verriegelungsmechanismus in Verbindung mit Steuerleisten angeordnet ist.

Bei dem bekannten Ausstell-Schiebedach für Kraftfahrzeuge sind der Verriegelungsmechanismus und die Steuerleisten zu einer von der die Gewindespindel mit dem Verschiebemechanismus aufnehmenden Gleitschiene getrennten Baueinheit zusammengefaßt, die verhältnismäßig aufwendig ist, einen beträchtlichen Platz beansprucht und erhebliches Gewicht aufweist.

Die Aufgabe der Erfindung ist es, ein Ausstell-Schiebedach für Kraftfahrzeuge gemäß der im Oberbegriff des Patentanspruches 1 erläuterten Art derart zu verbessern, daß einerseits die Ausstellfunktion verbessert und andererseits der Bauaufwand, der Platzbedarf und das Gewicht des Verriegelungsmechanismus und der Steuerleisten verringert wird.

Gemäß der Erfindung wird diese Aufgabe gelöst, indem ein Ausstell-Schiebedach für Kraftfahrzeuge nach dem Oberbegriff des Patentanspruches 1 die im Kennzeichenteil des Patentanspruches 1 aufgezeigten Merkmale aufweist.

In den weiteren Ansprüchen sind zweckmäßige Ausgestaltungen der Erfindung erläutert.

Durch die im Kennzeichen des Anspruches 1 angegebenen Merkmale wird eine sichere Verriegelung in geschlossener Lage des Ausstell-Schiebedaches erreicht, die bei Bewegungsbeginn zunächst aufgehoben und während der Bewegung der ausgestellten Deckelteile in ihrer Ausstellage wieder eingelegt wird und wobei die hierfür erforderlichen Einrichtungen unmittelbar an der Gleitschiene angeordnet und montiert sind, wodurch der Bauaufwand und der Platzbedarf verringert werden.

Die Erfindung wird anhand eines in der Zeichnung gezeigten Ausführungsbeispieles erläutert.

Es zeigt:

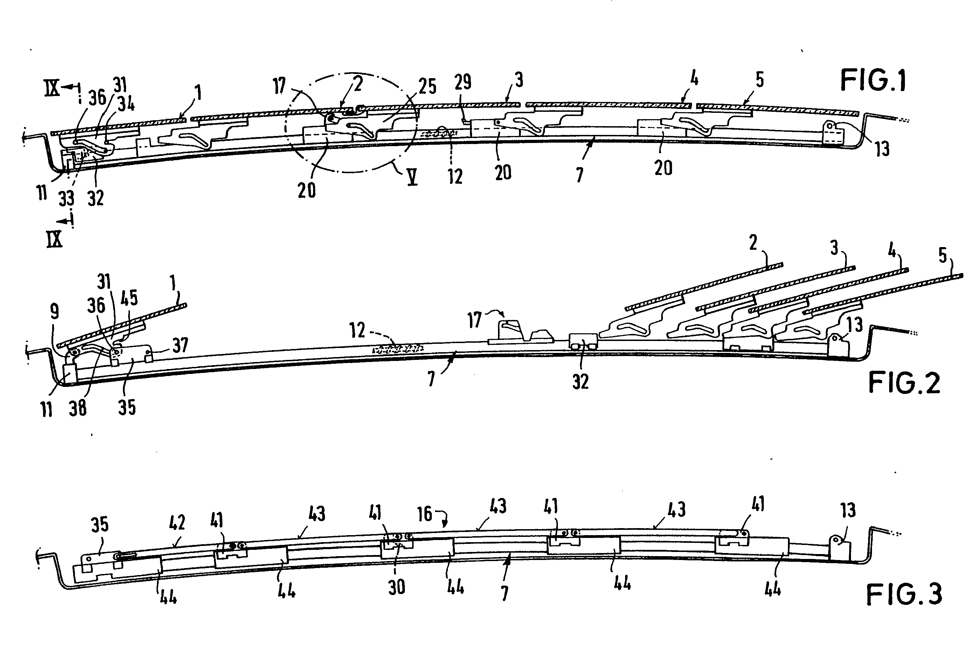

Fig. 1 einen schematischen, vertikalen Längsschnitt durch ein Ausstell-Schiebedach gemäß der Erfindung in geschlossener Stellung;

Fig. 2 einen schematischen, vertikalen Längsschnitt durch eine Ausführungsform der Erfindung in geöffneter Stellung;

Fig. 3 eine schematische Seitenansicht des Verriegelungsmechanismus;

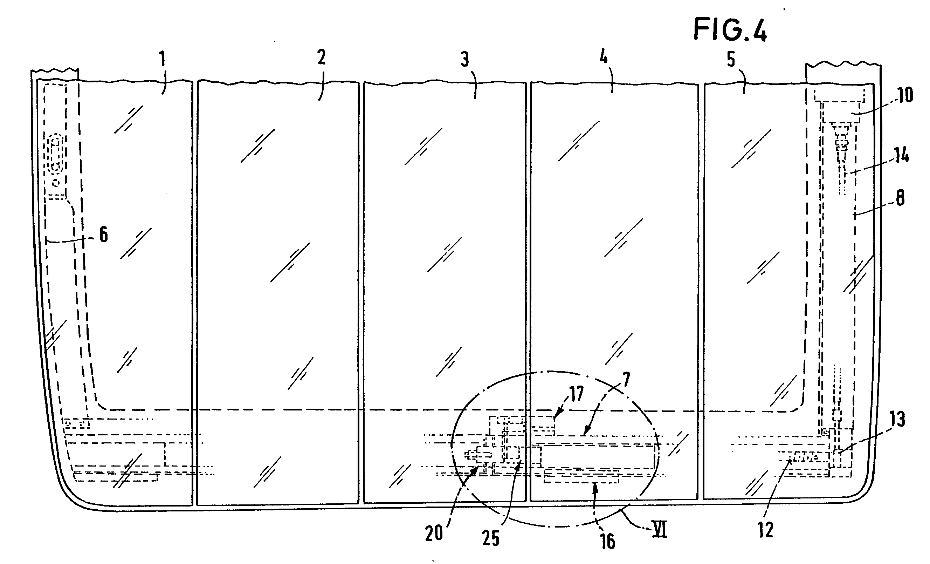

Fig. 4 eine schematische, halbseitige Draufsicht auf ein Ausstell-Schiebedach gemäß Fig. 1;

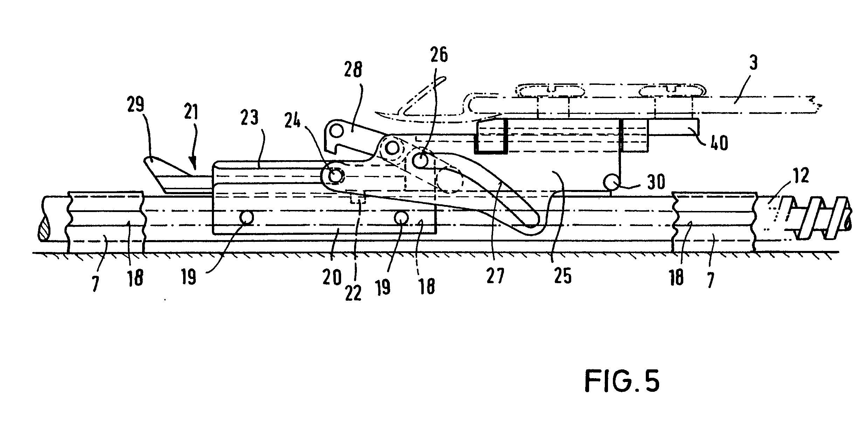

Fig. 5 eine Seitenansicht eines in Fig. 1 durch einen Kreis V in Strich-Punkt-Linien hervorgehobenen Führungsteiles mit seinem Gleitteil;

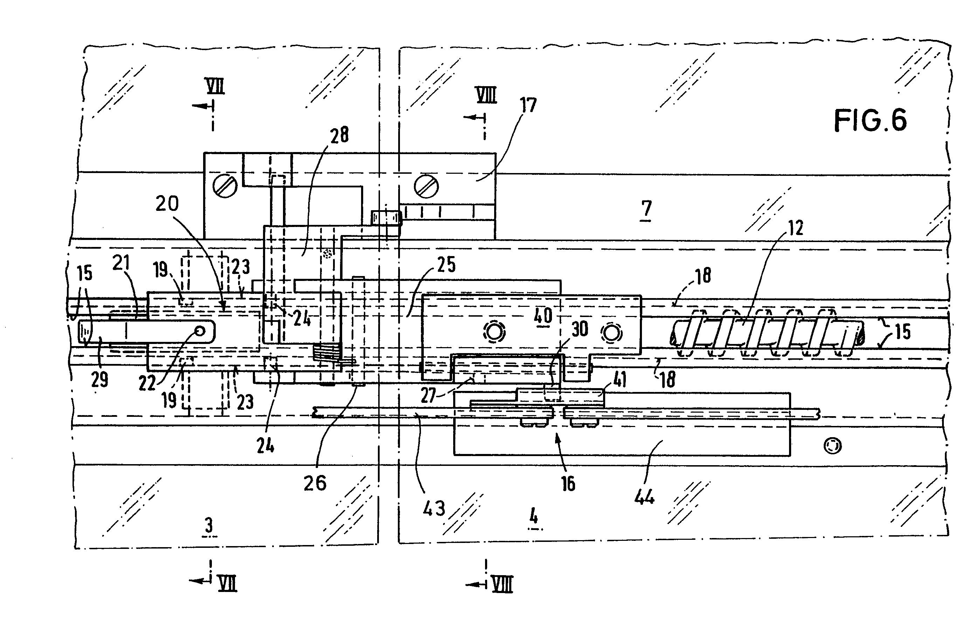

Fig. 6 eine Draufsicht auf die in der Fig. 4 durch einen Kreis VI in Strich-Punkt-Linien hervorgehobenen Führungs-Verriegelungs- und Steuerteilen;

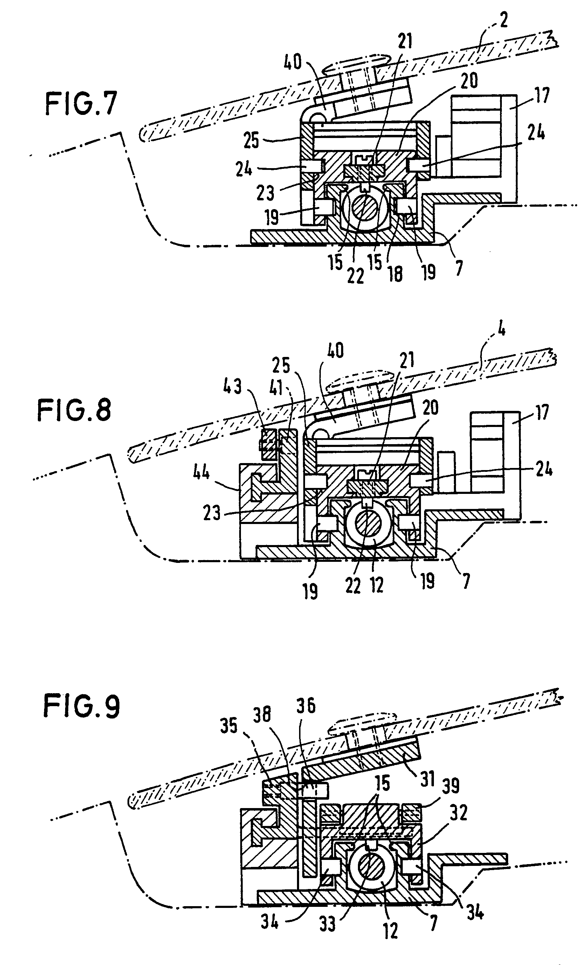

Fig. 7 einen vertikalen Schnitt entlang der Linie VII-VII in Fig. 6;

Fig. 8 einen vertikalen Schnitt entlang der Linie VIII-VIII in Fig. 6.

Fig. 9 einen vertikalen Schnitt entlang der Linie IX-IX in Fig 1.

Die Ausführungsform eines Ausstell-Schiebedaches für Kraftfahrzeuge gemäß der Erfindung weist fünf Deckelteile 1, 2, 3, 4 und 5 auf, die vorzugsweise aus getönten Glasscheiben bestehen können.

Der Deckelteil 1 bleibt hierbei stets in seiner vorderen Position, wohingegen die Deckelteile 2, 3, 4 und 5 seitlich über Führungsteile und Gleitteile geführt nach oben ausstellbar und nach hinten zu einem Stapel zusammenschiebbar sind. Dadurch kann eine maximale Dachöffnung freigegeben werden.

Das Ausstell-Schiebedach bildet eine komplett vormontierte Einheit, die aus einer vorderen Querstrebe 6, zwei seitlichen Gleitschienen 7 und einer hinteren Querstrebe 8 besteht. Die vordere Querstrebe 6 weist hierbei zwei Scharniere für das erste Deckelteil 1 auf und die hintere Querstrebe 8 nimmt den elektrischen Antriebsmotor 10 auf.

In den seitlichen Gleitschienen 7 wird je eine Gewindespindel 12 eingebettet aufgenommen, deren vordere Enden jeweils in einem Lagerblock 11 und deren hintere Enden jeweils in einem Schneckengetriebe 13 gelagert sind, die beide gleichfalls auf den seitlichen Gleitschienen 7 angeordnet und montiert sind.

Die Kraftübertragung vom elektrischen Antriebsmotor 10 auf die Gewindespindeln 12 erfolgt über biegsame Wellen 14 zu den jeweiligen Schneckengetrieben 13.

Durch die unterschiedlichen Wege, welche die Deckelteile 2, 3, 4 und 5 zurückzulegen haben, weist die Gewindespindel 12 drei verschiedene Steigungsabschnitte auf.

Dadurch, daß die Gleitschiene 7 so ausgebildet ist, daß die Gewindespindel 12 in ihr eingebettet aufgenommen wird, wird die Gewindespindel über ihre gesamte Länge einwandfrei abgestützt. Die Gleitschiene 7 weist oben einen Spalt 15 auf und nimmt an der einen Seite einen Verriegelungsmechanismus 16 und an der anderen Seite Steuerleisten 17 auf. Auf beiden Seite der Gleitschiene 7 sind Gleitnuten 18 vorgesehen, in die die Gleitstifte 19 von Gleitteilen 20 eingreifen.

Die Gleitteile 20 weisen eine getrennt bewegliche Leerlaufzunge 21 auf, die mit einem vertikalen Mitnehmerstift 22 versehen ist, der sich durch den Spalt 15 in der Gleitschiene 7 erstreckt und in Eingriff mit dem Gewindegang der Gewindespindel 12 kommt.

Die Gleitteile 20 sind an ihren Seiten mit horizontalen Nuten 23 versehen, in die Gleitstifte 24 der Führungsteile (25) eingreifen. An den Gleitteilen 20 ist ferner ein Einschrsubzapfen 26 vorgesehen, welcher mit einem Ende einen Führungszapfen 26 bildet, der sich im Führungsschlitz 27 der Führungsteile 25 bewegt.

Die über einen Schwenkbolzen 26 mit den Führungsteilen 25 gelenkig verbundenen Ausstellriegel 28 rasten beim Ausstellen der Deckelteile 2 bis 5 hinter einen Anschlag 29 der Leerlaufzungen 21, wodurch die Deckelteile 2 bis 5 in der ausgestellten Lage während der weiteren Bewegungsphase und allen Öffnungspositionen arretiert sind.

Seitliche Nocken 30 an den Führungsteilen 25 dienen in geschlossenem Zustand der Deckelverriegelung.

An den Führungsteilen 25 sind für die Deckelteile 2 bis 5 scharnierartig angelenkte Anschraubflächen 40 vorgesehen, wodurch für alle Deckelteile die gleichen Führungsteile verwendet werden können, obwohl bedingt durch die Dachform eines Kraftfahrzeuges jeder Deckelteil eine andere Wölbung aufweist.

Die seitlich an der Gleitschiene 7 befestigten Steuerleisten 17 halten die Deckelteile 2 bis 5 über die Ausstellriegel 28 während des Ausstell- bzw Absenkvorganges in ihrer Position. Gleichzeitig wird durch die Steuerleisten 17 beim Ausstellen der Deckel die Verriegelung zwischen dem Gleitteil 20 und dem Führungsteil 25 hergestellt und beim Absenken ausgeklinkt.

Die Ausstellmechanik für den Deckelteil 1 besteht aus einer Kulisse 31, einem Gleitteil 32, der über einen Mitnehmerstift 33 in den Gewindegang der Gewindespindel 12 eingreift und Gleitstiften 34, die in die seitlichen Nuten in der Gleitschiene 7 eingreifen. An einem Ausstellstück 35 sind ein Kulissenzapfen 36 und ein Verriegelungsstift 37 angeordnet, welche in den Führungsschlitz 38 bzw den Arretierungsschlitz 45 in der Kulisse 31 eingreifen.

Die Verbindung zwischen dem Gleitteil 32 und dem Ausstellstück 35 wird durch einen Fanghaken 39 hergestellt, der nach dem Ausstell- bzw Schließvorgang des Deckelteiles 1 ausgehoben bzw wieder eingerastet wird.

Die Sperren 41 des Verriegelungsmechanismus 16 sind über Schiebeleisten 42 mit dem Ausstellstück 35 bzw über Schiebeleisten 43 mit den übrigen Sperren 41 untereinander verbunden und an Führungsteilen 44 gelagert.

Die vordere Schiebeleiste 42 weist ein Leerlauf-Langloch auf, dessen Länge mit dem Weg der Leerlaufzunge der Gleitstücke 20 abgestimmt ist.

Dadurch wird, wenn der Deckelteil 1 in Lüftungsstellung gebracht wird, sichergestellt, daß zunächst der Leerlauf der Schiebeleiste 42 und der Leerlauf der Leerlaufzungen 21 aufgehoben wird, die Deckelteile 2 bis 5 aber noch verriegelt bleiben.

Das Ausstell-Schiebedach wird von einem Elektromotor angetrieben, wobei die verschiedenen Lüftungs- und Öffnungsstellungen elektronisch gesteuert werden.

Die Betätigung erfolgt vorzugsweise durch eine Sensor-Taste, wobei die Öffnungsphasen sowie Zwischenstops durch einmaliges Antippen und der Schließvorgang durch zweimaliges Antippen der Sensor-Taste ausgelöst werden.

Wird das Ausstell-Schiebedach nach Verlassen des Fahrzeuges nicht geschlossen, läuft es automatisch nach Ausschalten der Zündung in die gleichmäßige Ausstellposition zurück und bleibt in dieser Stellung. Bei einsetzendem Regen spricht ein Regensensor an und das Dach wird geschlossen.

Der Regensensor wird vorzugsweise so geschaltet, daß er bei eingeschalteter Zündung nicht anspricht sondern die Steuerung des Ausstell-Schiebedaches dem Fahrer überlassen wird.

**Patentansprüche**

1. Ausstell-Schiebedach für Kraftfahrzeuge mit einem ersten vorderen Deckelteil (1) und weiteren seitlich geführten und entgegen der Fahrtrichtung verschiebbaren Deckelteilen (2, 3, 4, 5) mit Führungsteilen (25), die entlang einer Gleitschiene (7) bewegbar sind und einerseits mit Gleitelementen und andererseits mit Führungselementen versehen sind und wobei die Deckelteile (1 bis 5) über an einer Kulisse (31) bzw. den Führungsteilen (25) der Deckelteile (2 bis 5) angreifende Gleitteile (32, 20) mit ihren hinteren Kanten jalousieartig nach oben ausstellbar sind und die weiteren Deckelteile (2 bis 5) hierauf über die Gleitteile (20) zum Freigeben der Dachöffnung in Fahrzeuglängsrichtung nach hinten einen Stapel bildend zusammenschiebbar sind, wobei die Betätigungseinrichtung in Form einer an allen Gleitteilen (32, 20) angreifenden Gewindespindel (12) ausgebildet ist und ein Verriegelungsmechanismus (16) in Verbindung mit Steuerleisten (17) angeordnet ist,
dadurch gekennzeichnet, daß
- die Gleitschiene (7) so ausgebildet ist, daß die Gewindespindel (12) in ihr eingebettet ist und an ihrer einer Seite der Verriegelungsmechanismus (16) und an ihrer anderen Seite die Steuerleisten (17) angeordnet und befestigt sind, und
- außer in dem ersten Gleitteil (32) in den weiteren Gleitteilen (20) getrennt bewegliche Leerlaufzungen (21) vorgesehen sind, und
- das erste Gleitteil (32) und die Leerlaufzungen (21) über vertikale Mitnehmerstifte (33 bzw. 22) in Eingriff mit dem Gewindegang der Gewindespindel (12) stehen und das erste Gleitteil (32) über einen Fanghaken (39) für einen bestimmten Weg ein Ausstellstück (35) mitnimmt, in dem ein Kulissenzapfen (36) und ein Verriegelungsstift (37) vorgesehen sind, die mit einem Kulissenschlitz (38) und einem Arretierungsschlitz (45) in der mit dem ersten Deckelteil (1) verbundenen Kulisse (31) zusammenwirken,
- wobei das Ausstellstück (35) eine erste Schiebeleiste (42) des Verriegelungsmechanismus (16) über eine Bolzen-Langloch-Verbindung betätigt und so die weiteren Schiebeleisten (43) noch nicht bewegt, wodurch Sperren (41) bei ausgestelltem ersten Deckelteil (1) die weiteren Deckelteile (2 bis 5) verriegelt halten und erst am Langlochende die Sperren (41) verschoben werden und die Verriegelung der weiteren Deckelteile (2 bis 5) freigeben, worauf der Fanghaken (39) über einen Stift vom Ausstellstück (35) ausgehoben und die weiteren Gleitteile (20) durch zum Anschlag kommen ihrer Leerlaufzungen (21) mitbewegt werden, wodurch sich Führungszapfen (26) im vorderen horizontalen Bereich und darauffolgend im nach unten geneigten Bereich von nach unten abgewinkelten Führungschlitzen (27) in den Führungsteilen (25) bewegen, wobei Ausstellriegel (28) durch Kurvenbahnen an den Steuerleisten (17) ausgehoben die Führungsteile (25) durch die Führungszapfen (26) in den Führungsschlitzen (27) nach oben gedrängt und dadurch die weiteren Deckelteile (2 bis 5) mit ihren hinteren Kanten jalousieartig nach oben ausgestellt und durch Wiedereinfallen der Ausstellriegel (28) in ihrer Ausstellage verriegelt werden.

2. Ausstell-Schiebedach nach Anspruch 1, dadurch gekennzeichnet, daß

- der Verriegelungsmechanismus (16) aus einer Vielzahl von Sperren (41) besteht, die in auf der Gleitschiene (7) befestigten Führungsteilen (44) verschiebbar und die untereinander über Schiebeleisten (42 und 43) verbunden sind.

3. Ausstell-Schiebedach nach den Ansprüchen 1 und 2, dadurch gekennzeichnet, daß

- die Steuerleisten (17) aus einer Vielzahl von auf der Gleitschiene (7) befestigten zwei unterschiedliche parallel und im Abstand liegende Kurvenbahnen aufweisende Steuerleistenteilen besteht, mit denen einerseits ein Gleitstück und andererseits ein Bolzen der Ausstellriegel (28) zusammenwirken, die an den Führungsteilen (25) schwenkbar angelenkt sind.

**Revendications**

1. Toit ouvrant orientable pour véhicules automobiles, comprenant une première partie antérieure de recouvrement (1) et des parties supplémentaires de recouvrement (2, 3, 4, 5) guidées latéralement, pouvant coulisser en sens inverse de la direction de déplacement, et comportant des pièces de guidage (25) qui sont mobiles le long d'une glissière (7) et sont munies, d'une part, d'éléments de glissement et, d'autre part, d'éléments de guidage, les parties de recouvrement (1 à 5) étant orientables vers le haut à la manière d'un store, par leurs bords postérieurs, par l'intermédiaire de pièces de glissement (32, 20) venant respectivement en prise avec une coulisse (31) ou avec les pièces de guidage (25) des parties de recouvrement (2 à 5), et les parties supplémentaires de recouvrement (2 à 5) pouvant être ramassées sur elles-mêmes par coulissement vers l'arrière sur les parties précitées en formant un empilement, par l'intermédiaire des pièces de glissement (20), en vue de dégager l'ouverture du toit dans le sens longitudinal du véhicule, le dispositif d'actionnement étant réalisé sous la forme d'une broche filetée (12) en prise avec toutes les pièces de glissement (32, 20), et un mécanisme de verrouillage (16) étant installé associativement à des barrettes de commande (17),

caractérisé par le fait que

- la glissière (7) est réalisée de manière que la broche filetée (12) s'y trouve logée, et le mécanisme de verrouillage (16) et les barrettes de commande (17) soient disposés et fixés, respectivement, sur l'un et sur l'autre de ses côtés, et

- des languettes (21) à course libre, mobiles séparément, sont prévues, outre dans la première pièce de glissement (32), dans les autres pièces de glissement (20), et

- la première pièce de glissement (32) et les languettes (21) à course libre sont en prise, par l'intermédiaire de tenons verticaux d'entraînement (33, respectivement 22), avec le filetage de la broche filetée (12) et la première pièce de glissement (32) entraîne sur une distance déterminée, par l'entremise d'un crochet d'emprisonnement (39), une pièce d'orientation (35) dans laquelle sont prévus un tourillon de coulissement (36) et une cheville de verrouillage (37) qui coopèrent, avec une fente de coulissement (38) et une fente d'arrêt (45), dans la coulisse (31) reliée à la première partie de recouvrement (1),

- la pièce d'orientation (35) actionnant un premier coulisseau (42) du mécanisme de verrouillage (16) par l'intermédiaire d'une solidarisation par téton et boutonnière, sans n'imprimer encore aucun mouvement aux autres coulisseaux (43), de sorte que, lorsque la première partie de recouvrement (1) est orientée, des verrous (41) maintiennent les parties supplémentaires de recouvrement (2 à 5) à l'état verrouillé et, uniquement à l'extrémité de la boutonnière, les verrous (41) sont animés d'un coulissement et libèrent le verrouillage des parties supplémentaires de recouvrement (2 à 5), après quoi le crochet d'emprisonnement (39) est soulevé à l'écart de la pièce d'orientation (35), par l'intermédiaire d'un téton, et les autres pièces de glissement (20) sont conjointement déplacées par venue en butée de leurs languettes (21) à course libre, si bien que des tenons de guidage (26) se déplacent dans la région horizontale antérieure, puis dans la région, inclinée vers le bas, de fentes de guidage (27) coudées vers le bas dans les pièces de guidage (25), des verrous d'orientation (28) étant alors soulevés par des cames curvilignes sur les barrettes de commande (17), les pièces de guidage (25) étant poussées vers le haut, dans les fentes de guidage (27), par l'intermédiaire des tenons de guidage (26), et les parties supplémentaires de recouvrement (2 à 5) étant par conséquent orientées vers le haut par leurs bords postérieurs, à la manière d'un store, puis verrouillées dans leur position orientée, par retombée des verrous d'orientation (28).

2. Toit ouvrant orientable selon la revendication 1,

caractérisé par le fait que
- le mécanisme de verrouillage (16) se compose d'un grand nombre de verrous (41) qui peuvent coulisser dans des pièces de guidage (44) fixées sur la glissière (7), et sont reliés les uns aux autres par l'intermédiaire de coulisseaux (42 et 43).

3. Toit ouvrant orientable selon les revendications 1 et 2,
caractérisé par le fait que
- les barrettes de commande (17) comprennent un grand nombre de parties de barrettes de commande qui sont fixées sur la glissière (7), présentent deux cames curvilignes différentes, agencées parallèlement et à distance, et avec lesquelles coopèrent, d'une part, une pièce de glissement et, d'autre part, une cheville des verrous d'orientation (28), qui sont articulées à pivotement sur les pièces de guidage (25).

**Claims**

1. A knock-out sliding roof for motor vehicles, with a first front cover member (1) and further laterally guided cover members (2, 3, 4, 5) displaceable contrary to the direction of travel, with guide members (25) which are movable along a slide rail (7) and which are provided on one side with slide elements and on the other side with guide elements, it being possible for the cover members (1 to 5) to be knocked out upwards in the manner of blinds by their rear edges by way of sliding members (32, 20) which engage on a slide block (31) or the guide members (25) of the cover members (2 to 5) and for the further cover members (2 to 5) to be slid together towards the rear in the longitudinal direction of the vehicle by way of the sliding members (20) so as to form a stack in order to open the roof opening, the actuating device being constructed in the form of a threaded spindle (12) which engages on all the sliding members (32, 20), and a locking mechanism (16) being arranged in conjunction with control bars (17), characterized in that
- the slide rail (7) is constructed in such a way that the threaded spindle (12) is fitted therein and the locking mechanism (16) is disposed and secured on one side of the slide rail (7) and the control bars (17) are disposed and secured on the other side thereof, and
- separately movable free-running tongues (21) are provided in the further sliding members (20) other than in the first sliding member (32), and

- the first sliding member (32) and the free-running tongues (21) engage with the thread of the threaded spindle (12) by way of vertical entrainment pins (33 and 22 respectively) and the first sliding member (32) moves a knock-out member (35) along by way of a catching hook (39) for a specific distance, there being provided in the knock-out member (35) a slide block pin (36) and a locking pin (37) which cooperate with a guide slot (38) and a locking slot (45) in the slide block (31) connected to the first cover member (1),
- the knock-out member (35) actuating the first sliding bar (42) of the locking mechanism (16) by way of a pin-slot connexion and thus not yet moving the further sliding bars (43), as a result of which, when the first cover member (1) is knocked out, locks (41) keep the further cover members (2 to 5) locked and only at the end of the slot are the locks (41) displaced and release the locking of the further cover members (2 to 5), after which the catching hook (39) is raised off the knock-out member (35) by way of a pin and the further sliding members (20) are jointly moved by the abutting of their free-running tongues (21), as a result of which guide pins (26) in the front horizontal area and in succession in the downwardly inclined area move from guide slots (27) angled downwards in the guide members (25), in which case knock-out bolts (28) are raised by curved paths on the control bars (17), the guide members (25) are forced upwards by the guide pins (26) in the guide slots (27) and in this way the further cover members (2 to 5) are knocked out upwards by their rear edges in the manner of blinds and are locked in their knocked-out position by the knock-out bolts (28) falling in again.

2. A knock-out sliding roof according to Claim 1, characterized in that the locking mechanism (16) comprises a plurality of locks (41), which are displaceable in guide members (44) secured to the slide rail (7) and are connected together by way of sliding bars (42 and 43).

3. A knock-out sliding roof according to Claims 1 and 2, characterized in that the control bars (17) comprise a plurality of control bar parts which are secured to the slide rail (7) and which comprise two different curved paths disposed parallel and at a distance and with which a sliding member on the one hand and a pin of the knock-out bolts (28) on the other hand cooperate, the said sliding member and the pin being pivotably articulated on the guide members (25).

FIG.1

FIG.2

FIG.3

FIG.4

FIG.5

FIG.6

FIG.7

FIG.8

FIG.9